# EUROPEAN PATENT SPECIFICATION

(11) **EP 2 921 357 B1**
(45) Date of publication and mention of the grant of the patent: **31.07.2019**
(21) Application number: 14160245.8
(22) Date of filing: 17.03.2014
(51) Int. Cl.: B60T 7/10, B60T 13/74

(54) **Parking brake system and method for operating a parking brake system**
Feststellbremssystem und Verfahren zur Betätigung eines Feststellbremssystems
Système de frein de stationnement et procédé pour faire fonctionner un système de frein de stationnement

(43) Date of publication of application: 23.09.2015
(73) Proprietor: Karlsson, Bo, 582 43 Linköping (SE)
(72) Inventor: Karlsson, Bo, 582 43 Linköping (SE)
(74) Representative: AWA Sweden AB

(56) References cited:
- EP-A1- 0 473 979
- DE-A1- 4 205 588
- FR-A1- 2 898 851
- JP-A- 2011 116 354

## Description

### TECHNICAL FIELD

The present invention relates to a parking brake system for a vehicle and a method for operating a parking brake system for a vehicle.

### BACKGROUND

Parking brakes are used in a wide range of vehicles such as cars, trucks, caravans, campers and so on. Known parking brakes can be mechanically or electrically actuated. A stick for operating a mechanical parking brake is often situated next to the driver's seat and the parking brake is activated by the driver pulling the stick, which causes a wire to transmit a tension force to a brake assembly which when activated prevents the wheels of the vehicle from turning.

JP 2011 116354 discloses a parking brake having an assist mechanism for moving a parking brake stick into an operating position.

Using a mechanical parking brake system can be cumbersome for a user in the sense that one has to bend down for pulling the stick. This is particularly true when the stick is placed close to a vehicle floor and the driver's seat is elevated as it is in many vehicles of larger size, such as vans, minibusses and campers. Also, some strength can be required both for activating and deactivating the parking brake by pulling and loosening the stick. Also, a manual stick occupies space in the vehicle that can be used for other purposes. Further, in certain vehicles, such as campers, the seats used when driving are able to be turned and used as chairs when the vehicle is parked. However, when a stick is pulled and the parking brake is activated, the stick may prevent the chair from being turned.

Thereby, there is a need for facilitating using a mechanically operated parking brake mechanism in order to overcome the problems of the state of the art.

### SUMMARY

An object of the present disclosure is to provide a system and method which eliminates or alleviates at least some of the disadvantages of the prior art.

The invention is defined by the appended independent claims, with embodiments being set forth in the appended dependent claims, in the following description and in the drawings.

According to a first aspect, there is provided a parking brake system for a vehicle, said system comprising a mechanical parking brake stick arranged to be operated by hand, a first transmission and a brake assembly for preventing or counteracting rotation of a wheel of the vehicle. The mechanical parking brake stick is connected to said first transmission which in turn is connected to said brake assembly such that operating said mechanical parking brake stick causes said first transmission to activate said brake assembly. The system further comprises a second transmission and an actuator, which is connected to said second transmission. The second transmission is arranged to engage said first transmission such that the brake assembly is activated. By providing a second transmission which engages the first transmission, it is possible to retrofit an electrical activation function for the parking brake system, or to provide an upgrade or option for an existing parking brake system.

The system may further comprise that the first transmission comprises a first transmission lever, which upon operation of the mechanical parking brake stick is pivotable about a first pivot axis from a release position towards a braking position. The second transmission comprises a second transmission lever, which upon operation of the actuator is pivotable about a second pivot axis. The levers are arranged so that the second lever is pivotable into engagement with the first lever, such that the first lever is pivoted towards the braking position. Using a second transmission lever gives an effective transfer of force within the parking brake system and also a robust, simple and durable construction.

The system may further comprise that the mechanical parking brake stick is arranged to transfer a first tension force to the first transmission. The first transmission is arranged to transfer a second tension force to the brake assembly. Also, the actuator is arranged to transfer a third tension force to the second transmission. In this manner, activating the mechanical parking brake stick or the first transmission will give rise to a tension force to the brake assembly and thereby an activation of the parking brake. Both options will thereby be available to the driver when wanting to activate the parking brake of a vehicle.

The system may further comprise a first cable arranged for transferring the first tension force from the mechanical parking brake stick to the first transmission. A second cable is arranged for transferring the second tension force from the first transmission to the brake assembly. A third cable is arranged for transferring a third tension force from the actuator to the second transmission. Thereby, tension forces are transferred in an effective manner between the parts within the system. Cables are preferably used since they are reliable, easily replaced if needed and have a low cost.

The system may further comprise a return spring arranged for providing a return force opposite to at least one of the first tension force, the second tension force and the third tension force. Thereby, there is no need for a device or similar generating forces for counteracting the tension forces in the system.

The system may further comprise that the second lever is designed to engage the first lever such that essentially only a contact force towards the braking position is achievable. In particular, the levers may interact by means only of compressive forces. In this way, a stable, durable and secure construction is achieved.

The system may further comprise that friction reducing means are provided to reduce friction at a point where the second transmission lever engages the first transmission lever, which gives an effective transfer of force with minimum energy loss and also reduces wear and tear in the system.

The system may further comprise that the second transmission lever and its pivot axis are connected to a base, which is attachable to the chassis of the vehicle such that the second lever is engageable to the first lever. Thereby, the second transmission is easily attached to the chassis and can be placed in the appropriate position according to the current circumstances such as type of vehicle or vehicle model. No additional device is needed for connecting the first and second transmissions.

The system may further comprise a controller, arranged to provide a control signal for operating the actuator.

The system may further comprise that the connection between said actuator and said second transmission includes a cable attached to a first end portion of said second lever so that when operating the actuator said cable is pulled which causes said first end portion of said second lever to move in a first direction.

According to a second aspect, there is provided a method of operating a parking brake system for a vehicle, said system comprising a mechanical parking brake stick arranged to be operated by hand, a first transmission and a brake assembly for preventing or counteracting rotation of a wheel of the vehicle. The mechanical parking brake stick is connected to said first transmission which in turn is connected to said brake assembly such that operating said mechanical parking brake stick causes said first transmission to activate said brake assembly. The method comprises: driving an actuator, which is connected to a second transmission such that the second transmission is caused to engage said first transmission. The second transmission comprises a second transmission lever, which upon operation of the actuator pivotes about a second pivot axis and engages with the first lever such that the first lever pivotes towards the breaking position such that the brake assembly is activated. By driving an actuator connected to a second transmission an electrical activation function for the parking brake system is achieved.

### BRIEF DESCRIPTION OF DRAWINGS

Figure 1 is an overview of a parking brake system for a vehicle according to the present invention.
Figure 2 is a partial view of non-assembled parts of a parking brake system according to the present invention.
Figure 3 is a partial view of the parts seen in figure 2 but from another perspective and with the parts assembled.

### DETAILED DESCRIPTION

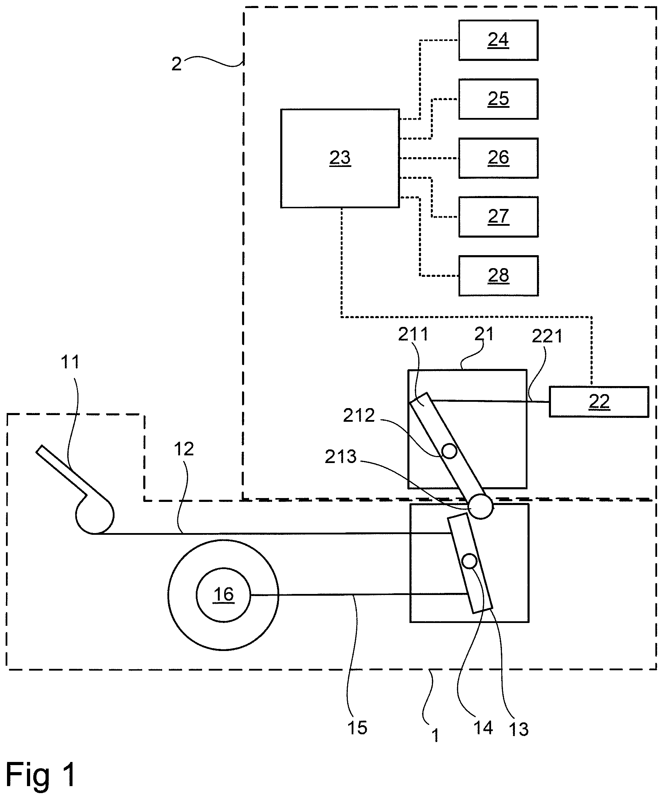

A parking brake system according to the present invention is disclosed in Figure 1. The system comprises a first assembly 1 and a second assembly 2.

The first assembly 1 is a conventional mechanical parking brake assembly comprising a mechanical parking brake stick 11, a first transmission 13, 14 and a brake assembly 16. The mechanical parking brake stick 11 is operated by hand by pulling the stick for activating the parking brake mechanism and by loosening the stick for deactivating it. Conventionally, there is some kind of locking mechanism locking the stick in an upper position, having to be unlocked, for example by pushing a button (not shown), for being able to lower the stick again to release the brake. The brake assembly 16 prevents or counteracts rotation of at least one wheel of the vehicle when activated. The brake assembly can be constructed in several different ways known in the art and include for example a drum brake, with brake blocks pressing against a brake disc and so on. The first transmission 13, 14 includes a first transmission lever 13 which is pivotable about a first pivot axis 14. Upon operation of the mechanical parking brake stick 11 the first transmission lever 13 is pivoted about the first pivot axis 14 from a release position towards a braking position, which causes activation of the braking assembly. Connections 12, 15 between the mechanical parking brake stick 11, the first transmission 13, 14 and the brake assembly are usually provided by means of a cable.

The second assembly 2 includes an electrically operated actuator 22, a controller 23, several subunits 24, 25, 26, 27, 28 and a second transmission 211, 212. The controller provides control signals to and collects data from a variety of subunits within the vehicle such as different parts of the engine, fuel tank, lights, air-conditioning, entertainment system and so on. The controller is also electrically connected to the actuator 22 and is thereby able to send control signals to, and optionally also to receive data from, the actuator 22.

The controller may be connected to a control device, such as a switch 24, through which the user may operate the system.

The controller may also be connected to a signalling device 25, such as a lamp, which may be arranged to indicate a status of the second assembly 2, for example: released (no light), activating (flashing light), activated (fixed light) and/or deactivating (flashing light).

The controller may also provide a signal to the vehicle's handbrake indicator 26, such that this is lit when the second assembly is activated and optionally, such that a vehicle control system will sense that the parking brake has been activated.

The controller may further be connected to a brake pedal sensor 27, such that it will receive information on whether the brake pedal is pressed or not. This information may be used to prevent release of the parking brake system if the brake pedal is not being pressed.

The controller may also be connected to an alarm system of the vehicle 28, such that the second assembly is activated when the alarm system is armed.

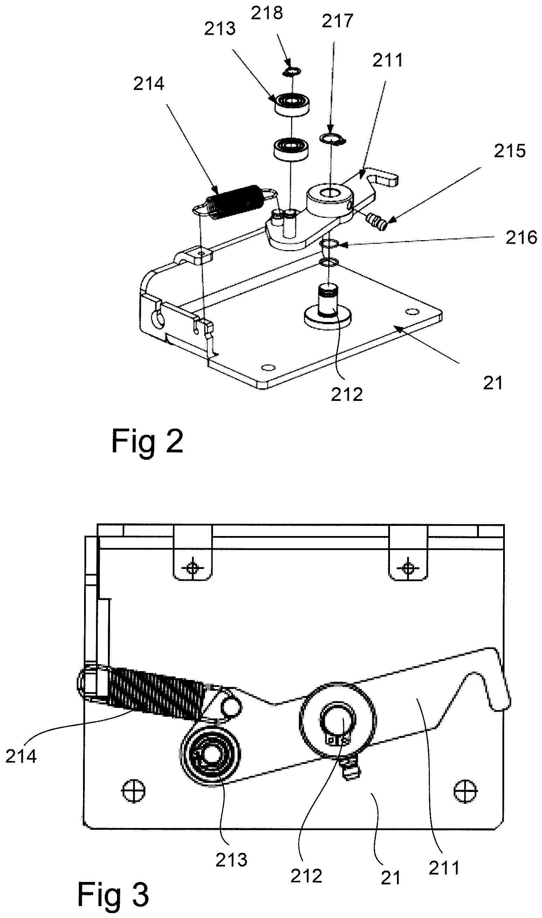

The actuator 22 is in turn connected to the second transmission 211, 212 via a connection 221 which preferably is a cable. The actuator may be an electric actuator, but hydraulic or pneumatic actuators may also be used. In the illustrated example, the actuator is arranged to provide tension force on a cable. For example, the actuator may comprise an electric motor driving a gear arrangement, which pulls on the cable. The cable may be attached to a member which is retracted within an actuator housing, or it may be rolled onto a reel. However, the actuator 22 may also be directly connected to the second transmission 211,212. In fact, the actuator may be any force generating actuator providing a force directly or indirectly to the second transmission 211, 212. The second transmission 211, 212 includes a second transmission lever 211 which is pivotable about a second pivot axis 212. The second lever 211 and its pivot axis may be connected to a base 21. The second transmission will be described in more detail in relation to Figures 2 and 3.

In figure 2 a detailed view of a second transmission is shown in a non-assembled manner. The same details can be seen in figure 3 in an assembled manner. The second transmission comprises a second transmission lever 211, which is pivotable about a second pivot axis. The lever 211 and its axis are attached to the base 21 by a suitable attaching device such as a screw, nail, pin or the like. One or more washers 216 may also be used.. The attachment may be performed by using for example a securing washer 217 and/or a lubricant nipple 215 for axial attachment to the pivoting axis. A spring 214 is fastened with one end on the base 21 and the other end on the second lever 211. The lever 211 may include an engaging part 213 placed substantially towards the one of its end parts that will be engaging with the first transmission. The engaging part 213 is in Figures 2 and 3 shown as comprising several circular elements surrounding a pin, attached to the second lever 211, and fastened by using a securing washer 218. Although a plurality of circular elements is shown in figure 2, the engaging part may consist of only one circular element surrounding the pin. Further, the engaging part can be movable or non-movable around the pin. The engaging part 213 may be constructed in another appropriate way, having a different shape, comprising a gear mechanism or the like. The other end of the second transmission lever 211 may be shaped in a way to enable fastening of connection means such as a cable. In figure 2 and 3 the end is shaped like a hook, but other configurations are possible such as a hole, a loop or some other construction for connecting for example a cable. The base 21 includes openings and/or protruding parts to enable fastening of the second transmission to the chassis of the vehicle.

In the following section, operation the parking brake system according to the present invention will be described.

When using the mechanical parking brake stick 11 for activating the parking brake of a vehicle, the driver operates the stick 11 by hand, for example by pulling it in an upwards direction. This generates a first tension force which may be transferred to the first transmission 13, 14 by a first cable 12. Then, the first transmission lever 13 pivots towards a braking position whereby a second tension force is generated and may be transferred by a second cable 15 from the first transmission 13, 14 to the brake assembly 16. Thereby, the brake assembly 16 is activated.

When the driver instead wishes to activate the parking brake of a vehicle not using the mechanical parking brake stick 11, the switch 24 is manoeuvred. The switch can be a button of any appropriate known type such as a knob, handle, touch sensitive button, pressure sensitive button and so on. It may be situated on the dashboard of the vehicle or somewhere else within the vehicle such as on or beside a seat, on the door of the vehicle etc. An electric signal is sent to the electrically operable actuator 22 which generates a (third) tension force pulling a connection 221, such as a cable, in a direction so that the first end part of the second transmission lever 211 of the second transmission 211, 212 is moved in a first direction. This movement causes the second lever 211 to pivot around its pivot axis 212 and thereby the other (second) end part of the lever 211 is moved in a direction substantially opposite the first direction.

The second transmission 211, 212 is situated in the vehicle in such a way that the second end portion of the second lever 211 will engage with the first transmission lever 13. Preferably it is attached to the chassis of the vehicle in the accurate position by using the base 21. In this manner, it is possible to attach the second transmission 211, 212 wherever appropriate depending on type of vehicle, vehicle model and so on.

When the second transmission lever 211 is pivoted, the engaging part 213 engages a first end part of the first transmission lever 13, thereby pushing it in the same direction as when the mechanical parking brake stick 11 is operated for activating the parking brake. The engagement may be provided as a mere contact pressure, whereby the second transmission lever 211 pushes the first transmission lever 13. However, the levers need not attach to each other and thus, the second lever 211 may not be able to pull the first lever 13 in a disengagement direction opposite to the engagement direction.

Thus, the first transmission lever 13 is pivoted around its pivot axis 14 and the other (second) end part of the first lever 13 is moved in a direction causing the braking assembly 16 to be activated. Hence, the first transmission lever 13 is pivoted from its release position into the braking position. Thereby, the parking brake of the vehicle is activated without having to use the mechanical parking brake stick 11.

When the parking brake is to be released, the user manoeuvres the button again and a control signal is generated and sent to the actuator 22 which releases the tension force and the second transmission lever 211 is pivoted back to its original position by tension force of the return spring 214. Thereby, the second lever 211 does not push towards the first transmission lever 13 and the first transmission lever 13 is therefore pivoted into its release position. Hence, the braking assembly is deactivated and the parking brake is released. A corresponding return spring (not shown) may be provided for causing the first transmission lever 13 and/or the brake assembly 16 to return to their released positions.

The second transmission lever 211 may be designed in a way that only makes it possible for it to generate a force acting on the first transmission lever 13 so that the first lever 13 is moved towards the braking position. In this way, a stable, durable and secure construction is achieved. Also, the levers 13, 211 may comprise friction reducing means at a point where the levers 13, 211 engage for limiting loss of energy and reducing wear and tear.

## Claims

1. A parking brake system for a vehicle, said system comprising:
a mechanical parking brake stick (11) arranged to be operated by hand,
a first transmission (13, 14), comprising a first transmission lever (13), which upon operation of the mechanical parking brake stick (11) is pivotable about a first pivot axis (14) from a release position towards a braking position, and
a brake assembly (16) for preventing or counteracting rotation of a wheel of the vehicle,
wherein said mechanical parking brake stick (11) is connected to said first transmission (13, 14), which in turn is connected to said brake assembly (16) such that operating said mechanical parking brake stick (11) causes said first transmission (13, 14) to activate said brake assembly (16),
**characterised by**:
a second transmission (211, 212), and
an actuator (22), which is connected to said second transmission (211, 212),
wherein the second transmission (211, 212) comprises a second transmission lever (211), which upon operation of the actuator (22) is pivotable about a second pivot axis (212), and
the levers (13, 211) are arranged so that the second lever (211) is pivotable into engagement with the first lever (13), such that the first lever (13) is pivoted towards the braking position such that the brake assembly (16) is activated.

2. The system as claimed in claim 1, wherein:
the mechanical parking brake stick (11) is arranged to transfer a first tension force to the first transmission (13, 14),
the first transmission (13, 14) is arranged to transfer a second tension force to the brake assembly (16), and
the actuator (22) is arranged to transfer a third tension force to the second transmission (211, 212).

3. The system as claimed in claim 2, further comprising at least one of:
a first cable (12) for transferring the first tension force from the mechanical parking brake stick (11) to the first transmission (13, 14),
a second cable (15) for transferring the second tension force from the first transmission (13, 14) to the brake assembly (16), and
a third cable (221) for transferring a third tension force from the actuator (22) to the second transmission (211, 212).

4. The system as claimed in claim 2 or 3, further comprising a return spring (214) for providing a return force opposite to at least one of the first tension force, the second tension force and the third tension force.

5. The system as claimed in any of claims 1-3, wherein the second lever (211) is designed to engage the first lever (13) such that essentially only a contact force towards the braking position is achievable.

6. The system as claimed in any of claims 1-4, further comprising friction reducing means provided to reduce friction at a point where the second transmission lever (211) engages the first transmission lever (13).

7. The system as claimed in any of claims 1-5, wherein the second transmission lever (211) and its pivot axis are connected to a base (21), which is attachable to the chassis of the vehicle such that the second lever (211) is engageable to the first lever (13).

8. The system as claimed in any one of the preceding claims, further comprising a controller (23), arranged to provide a control signal for operating the actuator (22).

9. The system as claimed in any of claims 2-7, wherein said connection between said actuator (22) and said second transmission (211, 212) includes a cable (221) attached to a first end portion of said second lever (211) so that when operating the actuator (22) said cable (221) is pulled which causes said first end portion of said second lever (211) to move in a first direction.

10. A method of operating a parking brake system for a vehicle, said system comprising:
a mechanical parking brake stick (11) arranged to be operated by hand,
a first transmission (13, 14), and
a brake assembly (16) for preventing or counteracting rotation of a wheel of the vehicle,
wherein said mechanical parking brake stick (11) is connected to said first transmission (13, 14), which in turn is connected to said brake assembly (16) such that operating said mechanical parking brake stick (11) causes said first transmission (13, 14) to activate said brake assembly (16), and
the first transmission (13, 14) comprising a first transmission lever (13), which upon operation of the mechanical parking brake stick (11) pivotes about a first pivot axis (14) from a release position towards a braking position,
the method comprising:
driving an actuator (22), which is connected to a second transmission (211, 212),
wherein the second transmission (211, 212) is caused to engage said first transmission (13, 14), the second transmission (211, 212) comprising a second transmission lever (211), which upon driving of the actuator (22) pivotes about a second pivot axis (212), and pivoting into engagement with the first lever (13), such that the first lever (13) pivotes towards the braking position such that the brake assembly (16) is activated.

## Patentansprüche

1. Feststellbremssystem für ein Fahrzeug, wobei das System umfasst:
einen mechanischen Feststellbremshebel (11), der angeordnet ist, um per Hand betätigt zu werden
eine erste Übertragungseinrichtung (13, 14), die einen ersten Übertragungshebel (13) umfasst, der bei Betätigung des mechanischen Feststellbremshebels (11) um eine erste Schwenkachse (14) aus einer Lösestellung in Richtung einer Bremsstellung schwenkbar ist, und
eine Bremsenbaugruppe (16), die eine Rotation eines Rads des Fahrzeugs verhindert oder dieser entgegenwirkt,
wobei der mechanische Feststellbremshebel (11) mit der ersten Übertragungseinrichtung (13, 14) verbunden ist, die wiederum mit der Bremsenbaugruppe (16) verbunden ist, so dass ein Betätigen des mechanischen Feststellbremshebels (11) bewirkt, dass die erste Übertragungseinrichtung (13, 14) die Bremsenbaugruppe (16) aktiviert,
**gekennzeichnet durch**:
eine zweite Übertragungseinrichtung (211, 212), und
ein Stellglied (22), das mit der zweiten Übertragungseinrichtung (211, 212) verbunden ist,
wobei die zweite Übertragungseinrichtung (211, 212) einen zweiten Übertragungshebel (211) umfasst, der bei Betätigung des Stellglieds (22) um eine zweite Schwenkachse (212) schwenkbar ist, und
die Hebel (13, 211) so angeordnet sind, dass der zweite Hebel (211) in ein Eingreifen mit dem ersten Hebel (13) schwenkbar ist, so dass der erste Hebel (13) in Richtung der Bremsposition geschwenkt wird, so dass die Bremsenbaugruppe (16) aktiviert wird.

2. System nach Anspruch 1, wobei:
der mechanische Feststellbremshebel (11) angeordnet ist, um eine erste Spannkraft an die erste Übertragungseinrichtung (13, 14) zu übertragen,
die erste Übertragungseinrichtung (13, 14) angeordnet ist, um eine zweite Spannkraft an die Bremsenbaugruppe (16) zu übertragen, und
das Stellglied (22) angeordnet ist, um eine dritte Spannkraft an die zweite Übertragungseinrichtung (211, 212) zu übertragen.

3. System nach Anspruch 2, weiter umfassend wenigstens eines von:
einem ersten Kabel (12) zum Übertragen der ersten Spannkraft von dem mechanischen Feststellbremshebel (11) an die erste Übertragungseinrichtung (13, 14),
einem zweiten Kabel (15) zum Übertragen der zweiten Spannkraft von der ersten Übertragungseinrichtung (13, 14) an die Bremsenbaugruppe (16), und
einem dritten Kabel (221) zum Übertragen einer dritten Spannkraft vom Stellglied (22) an die zweite Übertragungseinrichtung (211, 212).

4. System nach Anspruch 2 oder 3, weiter eine Rückstellfeder (214) umfassend, um eine Rückstellkraft bereitzustellen, die wenigstens einer von erster Spannkraft, zweiter Spannkraft und dritter Spannkraft entgegengesetzt ist.

5. System nach einem der Ansprüche 1-3, wobei der zweite Hebel (211) ausgelegt ist, um mit dem ersten Hebel (13) ineinanderzugreifen, so dass im Wesentlichen nur eine Berührungskraft in Richtung der Bremsstellung erreichbar ist.

6. System nach einem der Ansprüche 1-4, weiter Reibungsreduzierungsmittel umfassend, die bereitgestellt werden, um Reibung an einem Punkt zu reduzieren, an dem der zweite Übertragungshebel (211) mit dem ersten Übertragungshebel (13) ineinandergreift.

7. System nach einem der Ansprüche 1-5, wobei der zweite Übertragungshebel (211) und seine Schwenkachse mit einem Sockel (21) verbunden sind, der am Fahrgestell des Fahrzeugs so befestigt werden kann, dass der zweite Hebel (211) mit dem ersten Hebel (13) ineinandergreifen kann.

8. System nach einem der vorstehenden Ansprüche, das weiter eine Steuervorrichtung (23) umfasst, die angeordnet ist, um ein Steuersignal zum Betätigen des Stellglieds (22) bereitzustellen.

9. System nach einem der Ansprüche 2-7, wobei die Verbindung zwischen dem Stellglied (22) und der zweiten Übertragungseinrichtung (211, 212) ein Kabel (221) aufweist, das an einem ersten Endabschnitt des zweiten Hebels (211) angebracht ist, so dass beim Betätigen des Stellglieds (22) das Kabel (221) gezogen wird, was bewirkt, dass sich der Endabschnitt des zweiten Hebels (211) in einer ersten Richtung bewegt.

10. Verfahren zum Betätigen eines Feststellbremssystems für ein Fahrzeug, wobei das System umfasst:
einen mechanischen Feststellbremshebel (11), der angeordnet ist, um per Hand betätigt zu werden
eine erste Übertragungseinrichtung (13, 14), und
eine Bremsenbaugruppe (16), die eine Rotation eines Rads des Fahrzeugs verhindert oder dieser entgegenwirkt,
wobei der mechanische Feststellbremshebel (11) mit der ersten Übertragungseinrichtung (13, 14) verbunden ist, die wiederum mit der Bremsenbaugruppe (16) verbunden ist, so dass ein Betätigen des mechanischen Feststellbremshebels (11) bewirkt, dass die erste Übertragungseinrichtung (13, 14) die Bremsenbaugruppe (16) aktiviert, und
die erste Übertragungseinrichtung (13, 14) einen ersten Übertragungshebel (13) umfasst, der bei Betätigung des mechanischen Feststellbremshebels (11) aus einer Lösestellung in eine Bremsstellung um eine erste Schwenkachse (14) schwenkbar ist,
wobei das Verfahren Folgendes umfasst:
Betätigen eines Stellglieds (22), das mit einer zweiten Übertragungseinrichtung (211, 212) verbunden ist,
wobei die zweite Übertragungseinrichtung (211, 212) bewogen wird, mit der ersten Übertragungseinrichtung (13, 14) ineinanderzugreifen, wobei die zweite Übertragungseinrichtung (211, 212) einen zweiten Übertragungshebel (211) umfasst, der bei Antreiben des Stellglieds (22) um eine zweite Schwenkachse (212) schwenkt und in ein Eingreifen mit dem ersten Hebel (13) schwenkt, so dass der erste Hebel (13) in Richtung der Bremsstellung schwenkt, so dass die Bremsenbaugruppe (16) aktiviert wird.

## Revendications

1. Système de frein de stationnement pour un véhicule, ledit système comprenant :
une tige de frein de stationnement mécanique (11) conçue pour être actionnée à la main,
une première transmission (13, 14) comprenant un premier levier de transmission (13) apte à pivoter autour d'un premier axe de pivotement (14), d'une position de libération vers une position de freinage, pendant l'actionnement de la tige de frein de stationnement mécanique (11), et
un ensemble de frein (16) destiné à empêcher ou contrebalancer la rotation d'une roue du véhicule,
dans lequel ladite tige de frein de stationnement mécanique (11) est reliée à ladite première transmission (13, 14), laquelle est à son tour reliée audit ensemble de frein (16), de telle façon que l'actionnement de la tige de frein de stationnement mécanique (11) amène ladite première transmission (13, 14) à activer ledit ensemble de frein (16),
**caractérisé par** :
une deuxième transmission (211, 212), et
un actionneur (22) relié à ladite deuxième transmission (211, 212),
dans lequel ladite deuxième transmission (211, 212) comprend un deuxième levier de transmission (211) apte à pivoter autour d'un deuxième axe de pivotement (212) lors de l'actionnement de l'actionneur (22), et
les leviers (13, 211) sont conçus de manière à ce que le deuxième levier (211) puisse pivoter en engagement avec le premier levier (13), de telle façon que le premier levier (13) pivote vers la position de freinage de manière à activer l'ensemble de frein (16).

2. Système selon la revendication 1, dans lequel :
la tige de frein de stationnement mécanique (11) est conçue pour transférer une première force de tension à la première transmission (13, 14),
la première transmission (13, 14) est conçue pour transférer une deuxième force de tension à l'ensemble de frein (16), et
l'actionneur (22) est conçu pour transférer une troisième force de tension à la deuxième transmission (211, 212).

3. Système selon la revendication 2, comprenant en outre au moins l'un parmi :
un premier câble (12) destiné à transférer la première force de tension de la tige de frein de stationnement mécanique (11) vers la première transmission (13, 14),
un deuxième câble (15) destiné à transférer la deuxième force de tension de la première transmission (13, 14) vers l'ensemble de frein (16), et
un troisième câble (221) destiné à transférer une troisième force de tension de l'actionneur (22) vers la deuxième transmission (211, 212).

4. Système selon la revendication 2 ou 3, comprenant en outre un ressort de rappel (214) destiné à fournir une force de rappel opposée à l'une au moins parmi la première force de tension, la deuxième force de tension et la troisième force de tension.

5. Système selon l'une quelconque des revendications 1 à 3, dans lequel le deuxième levier (211) est conçu pour engager le premier levier (13) de telle façon que seule une force de contact vers la position de freinage peut être atteinte.

6. Système selon l'une quelconque des revendications 1 à 4, comprenant en outre un moyen de réduction de la friction prévu pour réduire la friction à un endroit où le deuxième levier (211) engage le premier levier (13).

7. Système selon l'une quelconque des revendications 1 à 5, dans lequel le deuxième levier (211) et son axe de pivotement sont reliés à une base (21), laquelle peut être fixée au châssis du véhicule de manière à ce que le deuxième levier (211) puisse engager le premier levier (13).

8. Système selon l'une quelconque des revendications précédentes, comprenant en outre un dispositif de commande (23) conçu pour fournir un signal de commande pour l'actionnement de l'actionneur (22).

9. Système selon l'une quelconque des revendications 2 à 7, dans lequel ladite liaison entre ledit actionneur (22) et ladite deuxième transmission (211, 212) comprend un câble (221) fixé à une première partie d'extrémité dudit deuxième levier (211) de sorte que lors de l'actionnement de l'actionneur (22), ledit câble (221) est tiré, déplaçant ainsi ladite première partie d'extrémité dudit deuxième levier (211) dans une première direction.

10. Procédé pour l'actionnement d'un système de frein de stationnement pour un véhicule, ledit système comprenant :
une tige de frein de stationnement mécanique (11) conçue pour être actionnée à la main,
une première transmission (13, 14), et
un ensemble de frein (16) destiné à empêcher ou contrebalancer la rotation d'une roue du véhicule,
dans lequel ladite tige de frein de stationnement mécanique (11) est reliée à ladite première transmission (13, 14), laquelle est à son tour reliée audit ensemble de frein (16), de telle façon que l'actionnement de la tige de frein de stationnement mécanique (11) amène ladite première transmission (13, 14) à activer ledit ensemble de frein (16), et
la première transmission (13, 14) comprend un premier levier de transmission (13) pivotant autour d'un premier axe de pivotement (14), d'une position de libération vers une position de freinage, lors de l'actionnement de la tige de frein de stationnement mécanique (11),
le procédé comprenant :
l'entraînement d'un actionneur (22) relié à une deuxième transmission (211, 212),
dans lequel la deuxième transmission (211, 212) est amenée à engager ladite première transmission (13, 14), la deuxième transmission (211, 212) comprenant un deuxième levier de transmission (211) pivotant autour d'un deuxième axe de pivotement (212) lors de l'entraînement de l'actionneur (22), et pivotant en engagement avec le premier levier (13), de telle façon que le premier levier (13) pivote vers la position de freinage de manière à activer l'ensemble de frein (16).
